# EUROPÄISCHE PATENTSCHRIFT

(11) **EP 1 653 677 B1**
(45) Veröffentlichungstag und Bekanntmachung des Hinweises auf die Patenterteilung: **13.08.2008**
(21) Anmeldenummer: 05014070.6
(22) Anmeldetag: 29.06.2005
(51) Int. Cl.: H04L 12/56

(54) **Funksystem zur Übertragung von Daten und Datensammler**
Radio system for transmission of data and data collector
Système radio pour transmission de données et collecteur de données

(30) Priorität: 29.10.2004 DE 102004052946; 18.03.2005 DE 102005012598
(43) Veröffentlichungstag der Anmeldung: 03.05.2006
(73) Patentinhaber: Techem Energy Services GmbH, 65760 Eschborn (DE)
(72) Erfinder: Ohl, Jochen, Dr., 64823 Gross-Umstadt (DE); Freise, Björn Achim, 64546 Mörfelden-Walldorf (DE); Kähler, Arne, Dr., 12683 Berlin (DE); Hartmann, Renée, 35510 Butzbach (DE); Rettert, Michael, 65795 Hattersheim (DE); Schulz, Hans-Jürgen, 61381 Friedrichsdorf (DE)
(74) Vertreter: KEIL & SCHAAFHAUSEN Patentanwälte

(56) Entgegenhaltungen:
- DE-C1- 10 123 251
- JOHN MOY: "OSPF VERSION 2" IETF: RFC 2328, [Online] April 1998 (1998-04), XP002346455 Gefunden im Internet: URL:http://www.ietf.org/rfc/rfc2328.txt?nu mber=2328> [gefunden am 2005-09-23]

## Beschreibung

Die Erfindung betrifft ein Verfahren zur Übertragung von Daten in einem Funksystem zwischen mehreren Geräten, insbesondere Datensammlern zur Erfassung und/oder Auswertung von Verbrauchsdaten oder Versorgungszuständen, mit jeweils einer Recheneinheit mit Datenspeicher sowie mit einem Funksender zum Senden und einem Funkempfänger zum Empfangen von die Daten enthaltenden Funktelegrammen, sowie einen entsprechenden Datensammler. Mindestens einem oder jedem Gerät sind als Datenquelle vorher festgelegte Daten zugeordnet, bspw. Verbrauchsdaten von einer zugeordneten Verbrauchserfassungsvorrichtung oder Versorgungszustände von Heizflächen. Jedes Gerät speichert sowohl ihm zugeordnete Daten als auch von einem anderen Gerät empfangene Daten in seinem Datenspeicher ab und sendet sie mindestens einmal als Funktelegramm aus. Zwischen verschiedenen Geräten können ggf. eine oder mehrere Einrichtungen zum Wiederholen von Funktelegrammen angeordnet sein, insbesondere um längere Funkstrecken zu überbrücken. Diese Einrichtungen können einfache mit einem Funksender und einem Funkempfänger ausgestattete Repeater sein, die jedes empfangene Funktelegramm wieder aussenden oder eine selektive Aussendung von Funktelegrammen vornehmen. Dies kann mit oder ohne Zwischenspeicherung erfolgen. Mit derartigen Repeatern ist es insbesondere möglich, längere Funkstrecken zu überbrücken, wenn die Gefahr besteht, dass ein Gerät keine oder nur eine qualitativ schlechte direkte Funkkommunikation zu einem benachbarten Gerät aufbauen kann.

Datenübertragung per Funk findet in der praktischen Anwendung eine zunehmende Verbreitung. Ein häufiger Anwendungsfall stellt die elektronische Verbrauchswerterfassung dar, bei der Heizkostenverteiler gemessene Daten, bspw. verschiedene Temperaturmesswerte, an Wohnungszentralen senden, die diese Daten untereinander austauschen, so dass an jeder Wohnungszentrale alle Verbrauchswerte zur Auswertung oder Auslesung zur Verfügung stehen. Ist die Wohnungszentrale frei zugänglich, müssen die Wohnungen nicht mehr betreten werden.

In der Hausautomation hat die Funkkommunikation vor allem bei einer nachträglichen Installation den Vorteil, dass keine zusätzlichen Leitungen für die Kommunikation benötigt werden. Dies vermindert den Installationsaufwand. Allerdings bietet die Funkkommunikation nur eine begrenzte Reichweite. Innerhalb eines Gebäudes werden mit den gängigen Sendeleistungen von kleiner 10 mW oder 25 mW im SRD-Band (433 MHz und 868 MHz) nur Reichweiten von typischerweise 10 bis 20 Metern erreicht.

Befinden sich die Sender und Empfänger innerhalb einer Wohnung, ist die direkte Kommunikation zwischen den Kommunikationspartnern, bspw. einer Wohnungszentrale und einem Heizkörperregler, in der Regel problemlos möglich. Bei größeren Entfernungen können die Funktelegramme allerdings nicht mehr direkt empfangen werden. Ein Funktelegramm muss dann über eine oder mehrere Zwischenstation(en) weitergeleitet werden, bevor es zu dem eigentlichen Empfänger gelangt.

Bei verschiedenen Anwendungen dient ein speziell ausgewähltes Gerät als Master-Gerät, bspw. eine Master-Wohnungszentrale in einem größeren Gebäude. Diese Master-Wohnungszentrale wird häufig nicht nur für eine zentrale Auslesung der Verbrauchsdaten aller im Haus installierten Wohnungszentralen, sondern auch für weitere Steueraufgaben genutzt. Bei einer Regelung für eine wärmebedarfsgeführte Vorlauftemperatur gibt es bspw. in einem Gebäude genau eine Wohnungszentrale, die ggf. über weitere Funktions- oder Schnittstellenmodule an die Heizungsregelung zur Ansteuerung des Reglers einer Heizungsanlage angeschlossen ist. Diese Master-Wohnungszentrale benötigt von allen anderen Wohnungszentralen im Gebäude die Information über den Wärmebedarf bzw. über den Versorgungszustand in der jeweiligen Wohnung. Besonders in größeren Liegenschaften stehen die Wohnungszentralen nicht in direktem Funkkontakt, die Daten müssen in diesem Fall über mehrere Wohnungszentralen zur Ziel- bzw. Master-Wohnungszentrale übertragen werden. Umgekehrt kann diese Master-Wohnungszentrale über Informationen aus der Heizungsanlage (bspw. Brauchwasser- oder Außentemperatur) verfügen, die zu Anzeigezwecken an alle Wohnungszentralen des Funknetzes verteilt werden soll.

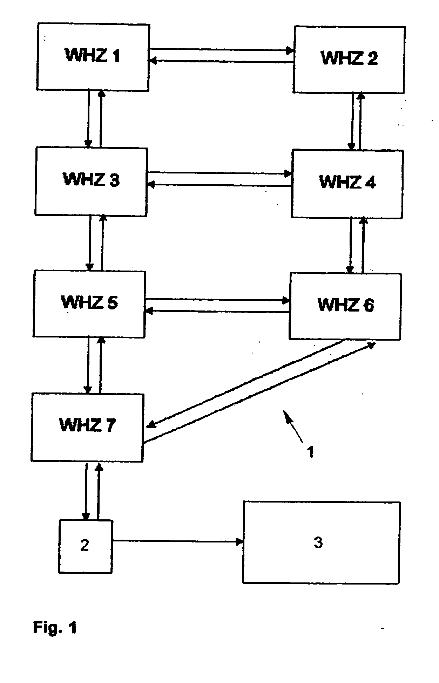

Hierzu wird ein sogenanntes Flutnetzwerk eingerichtet, bei dem jedes Gerät die empfangenen Daten wieder aussendet ("flutet"), um sie an alle in das Funksystem integrierte Geräte zu verteilen oder insbesondere einem Mastergerät zuzuleiten. Das bei dieser Form der Informationsweiterleitung vorliegende Problem besteht darin, dass ohne Implementierung besonderer Maßnahmen die Informationen bzw. Daten zwischen den Geräten ständig hin und her übertragen werden. Dies soll an einem Beispiel entsprechend dem in Fig. 1 dargestellten Funksystem erläutert werden:

Eine erste Wohnungszentrale WHZ1 sendet ein Funktelegramm mit Daten über den Wärmebedarf in der ersten Wohnung aus. Dieses Funktelegramm ist für die Wohnungszentrale WHZ7 bestimmt, wird aber von dieser aufgrund der Entfernung nicht direkt empfangen. Das Funktelegramm kann nur von den Wohnungszentralen WHZ2 und WHZ3 empfangen werden. Beide Wohnungszentralen leiten das Funktelegramm weiter, indem sie es nach dem Empfang ebenfalls aussenden. Das von der Wohnungszentrale WHZ3 ausgesendete Funktelegramm wird von den Wohnungszentralen WHZ4, WHZ5 und auch von der Wohnungszentrale WHZ1 empfangen. Ohne besondere Vorkehrungen würde nun die Wohnungszentrale WHZ1, da das Funktelegramm nicht für sie bestimmt ist, das Funktelegramm ebenfalls weiterleiten und erneut aussenden. Dieser Effekt wird im folgenden ,zirkulare Datenübertragung' genannt.

Um dies zu verhindern ist in der DE 101 22 218 A1 ein Verfahren zur Übermittlung von Datenpaketen in einem Funknetz beschrieben, bei dem die Weiterleitung von Datenpaketen unterbrochen wird, sobald der angestrebte Empfänger das Datenpaket empfangen und ein sogenanntes Kill-Paket gesendet hat, Die zirkulare Datenübertragung kann damit aber erst unterbunden werden, wenn alle Funkstationen das Kill-Paket empfangen haben.

Ferner wurde ein sogenanntes OSPF(Open Shortest Path First) TCP/IP Internet Routing Protocol entwickelt, das Routing-Informationen zwischen Routern eines Systems verteilt und ausdrücklich für eine TCPIIP-Internet-Umgebung gedacht ist. In diesem insgesamt sehr aufwendigen TCP/IP-Protokoll werden Link State Advertisement(LSA)-Informationen über den lokalen Zustand eines Routers oder eines Netzwerkes geflutet. Während des Flutens der LSA-Informatinen ist es notwendig zu bestimmen, welche der verschiedenen LSA-Informationen in den Routern neuer ist. Hierzu wird zunächst eine Link State(LS)-Sequenzummer in Form eines inkrementellen Zählers verwendet, wobei eine neuere LS-Sequenznummer eine neuere LSA-Information anzeigt. Bei gleichen LS-Sequenznummern wird über eine LS-Checksumme und ein LS-Altersfeld geprüft, ob unterschliedliche LSA-Informationen vorliegen. Sofern eine neue LSA-Information empfangen wird, wird diese an benachbarte Router weitergeleitet. Dazu werden die LSA-Informationen der benachbarten Router untersucht. Sofern davon ausgegangen wird, dass der benachbarte Router keine aktuellen LSA-Informationen hat, wird die aktuelle LSA-Information auf eine Versandliste gesetzt, um diese den benachbarten Routern zuzusenden. Die Aussendung wird so lange wiederholt, bis eine Bestätigungsmeldung von dem benachbarten Router kommt.

Aus der DE 199 11 657 C2 ist ebenfalls ein Verfahren zur Übertragung von Daten bekannt. Bei diesem Verfahren organisiert sich ein Funknetzwerk aus mehreren Sammelstationen in verschiedenen Hierarchieebenen. Je nach Datenübertragungsmodus (abwärts oder aufwärts) werden nur Telegramme von Sammelstationen mit einer um 1 höheren bzw. um 1 niedrigeren Hierarchienummer empfangen. Dadurch, dass Daten jeweils nur zur nächsthöheren bzw, -niedrigeren Hierarchieebene übertragen werden, wird die zirkulare Datenübertragung unterbunden. Nachteilig hierbei ist das komplexe Verfahren, mit dem sich die Geräte des Funknetzes in Hierarchieebenen organisieren müssen, Weiterhin muss die Datenübertragungsrichtung bekannt sein, was einen erhöhten Organisationsaufwand mit sich bringt,

In der DE 101 23 251 C ist ein Funksystem zur Verbrauchsdatenerfassung beschrieben, bei welchem von einem Datensammler empfangene Funktelegramme ebenfalls wieder ausgesendet werden, wobei das Aussenden mittels einer Funktelegrammverwaltung kontrolliert wird. Das Aussenden wird dabei von zwei Bedingungen abhängig gemacht: Das dem Funktelegramm zugeordnete Endgerät ist nicht in einer Sperrliste enthalten und ein in dem Funktelegramm mitgeführter Zugriffszähler hat einen bestimmten Schwellwert nicht überschritten. Ein Endgerät wird zusammen mit einer Sperrfrist in die Sperrliste eingetragen, sobald ein Funktelegramm des Endgerätes von einem Datensammler empfangen wurde und noch nicht in der Sperrliste enthalten ist. Nach Ablauf der Sperrfrist wird es aus der Sperrliste gelöscht. Der Zugriffszähler wird bei jedem Aussenden des Funktelegramms hochgezählt.

Bei diesem Verfahren bestimmen die Datensammler durch die Sperrfrist und den Schwellwert des Zugriffszählers, ob ein Funktelegramm weitergeleitet wird oder nicht. Wenn ein Endgerät ein neues Datum sendet, aber noch in der Sperrliste enthalten ist, wird dieses Funktelegramm nicht weitergeleitet. Das Verfahren eignet sich daher nicht für Anwendungen, bei denen es auf eine schnelle Aktualisierung der Daten ankommt. In diesem Fall müssen auch kurz hintereinander ausgesendete Funktelegramme weitergeleitet werden, sofern sich die Daten unterscheiden.

Aufgabe der Erfindung ist es daher, ein Funksystem zur Übertragung von Daten der eingangs genannten Art vorzuschlagen, bei dem Funktelegramme schnell und effektiv weitergeleitet werden, wobei insbesondere eine zirkulare Datenübertragung zwischen den einzelnen Geräten vermieden werden soll.

Diese Aufgabe wird erfindungsgemäß mit den Merkmalen des Anspruchs 1 gelöst. Dabei versieht jedes Gerät ihm zugeordnete Daten mit einem Zählerwert, zählt den Zählerwert bei einer Änderung dieser Daten weiter und sendet die geänderten Daten zusammen mit dem Zählerwert mindestens einmal aus. Ferner speichert jedes Gerät empfangene Daten, d.h. einem anderen Gerät zugeordnete Daten, die von diesem Gerät bereits ausgesendet wurden, zusammen mit dem Zählerwert in seinem Datenspeicher nur ab und sendet diese nur wieder aus, wenn der Zählerwert dieser Daten sich gegenüber dem in seinem Datenspeicher abgespeicherten Zählerwert verändert hat. Das erfindungsgemäße "Fluten" der Funktelegramme in dem durch das Funksystem aufgebauten Funknetz findet also nur in Abhängigkeit einer Überprüfung des Zählerstandes eines den zu übertragenden Daten zugeordneten Zählerwertes statt. Der Zählerwert wird erfindungsgemäß von dem Gerät gesetzt, dem die auszusendenden Daten zugeordnet sind. Dabei bestimmt dieses als Datenquelle in dem Funksystem dienende Gerät selbst, ob das Funktelegramm mit den Daten von den weiteren Geräten im Funknetz weitergeleitet werden soll.

Das gesamte Funksystem kann dabei erfindungsgemäß aus verschiedenen, voneinander getrennten Funknetzen bestehen, die sich durch einen in jedem Funktelegramm enthaltenen Systemcode unterscheiden, damit sich verschiedene Funknetze nicht wechselseitig beeinflussen. Dazu kann ein Gerät, bspw. eine Wohnungszentrale, die Systemcodes benachbarter Funknetze kennen, und Funktelegramme aus einem anderen Funknetz mit einem bekannten Systemcode wie ein eigenes Funktelegramm behandeln. Dadurch lässt sich ein aus einem Funknetzverbund aufgebautes Funksystem schaffen. Dies ist insbesondere dann vorteilhaft, wenn die an einem Funknetz mit einheitlichem Systemcode teilnehmenden Geräte auf eine bestimmte Anzahl begrenzt ist. Eine Geräte-ID kann in diesem Fall bspw. aus einer Kombination von Systemcode und Geräte-ID gebildet werden, um eine eindeutige Zuordnung der Zählerwerte zu erreichen.

Der erfindungsgemäße Zählerwert ist ein zeitunabhängiger Indikator für die Aktualität der Daten, bspw. der Zustandsinformationen, wie Verbrauchswerten oder Versorgungszustandsinformationen, Heizflächen- und/oder Raumtemperaturwerten, Ventilhubstellungen oder dgl.. Wenn bestimmte Daten, bspw. die Vorsorgungszustände einzelner Heizflächen oder Wohnungen zur wärmebedarfsgeführten Regelung der Vorlauftemperatur einer Heizungsanlage, innerhalb eines Funknetzes oder -systems schnell an die mit dieser Regelung in Verbindung stehende Wohnungszentrale gesendet werden müssen, kann die Datenquelle die sofortige Weiterleitung der Funktelegramme mit den entsprechenden Daten in dem Funksystem durch Aussenden der Daten mit weitergezähltem, insbesondere inkrementiertem oder dekrementiertem, Zählerwert veranlassen. Dabei wird der Zählerwert vorzugsweise in einer bestimmten Zählrichtung verändert, d.h. bspw. bei einem Inkrementieren des Zählerwerts vergrößert. Die Erfassung einer Veränderung des Zählerwertes kann auch den Fall mit einschließen, dass noch kein Zählerwert respektive Datensatz in dem Gerät abgespeichert ist, so dass die Geräte sofort bei Inbetriebnahme automatisch in das Funksystem integriert werden können.

Zur Erhöhung der Übertragungssicherheit sendet jedes Gerät ihm zugeordnete Daten mit gleichem Zählerwert mehrfach aus, so dass jede Datenquelle die in das Funknetz auszusendenden Daten mehrfach aussendet. Bei nur einer Aussendung ist die Gefahr groß, dass ein Datenwert von den benachbarten Geräten im Empfangsbereich bspw. aufgrund eines globalen Störsignals überhaupt nicht empfangen wird und diese Information daher verloren wäre.

Es ist jedoch ausreichend, wenn jedes Gerät von einem anderen Gerät empfangene Daten mit gleichem Zählerwert nur genau einmal aussendet, um das Funktelegramm in dem gesamten Funknetz zu verteilen, d.h. zu fluten. Dies liegt daran, dass die von der Datenquelle ausgesendeten ursprünglichen Funktelegramme in der Regel bereits von mehreren weiteren Geräten empfangen und weitergeleitet werden. In einem typischen Anwendungsfall sind die Geräte einer Wohnung der Liegenschaft zugeordnete Datensammler, sogenannte Wohnungszentralen. Diese können meistens mit mehreren benachbarten Wohnungszentralen direkt kommunizieren, so dass das erste ursprüngliche Funktelegramm von jeder der empfangenden Wohnungszentralen zu pseudozufällig verteilten oder ihr fest zugeordneten Zeitpunkten weitergeleitet wird. Aufgrund dieser Vervielfältigung des ursprünglichen Funktelegramms bereits im ersten Übertragungsschritt ist im Normalfall genau eine Funkaussendung zur Weiterleitung ausreichend.

Erfindungsgemäß können die einem Gerät zugeordneten Daten mehrere Datensätze beinhalten, wobei mehreren Datensätzen ein gemeinsamer Zählerwert zugeordnet sein kann. Insbesondere kann ein Zählerwert für alle Datensätze eines Gerätes vorgesehen werden. So können bspw. alle Daten einer Wohnungszentrale auf einmal aktualisiert werden, wenn die Wohnungszentrale den ihr zugeordneten Zähler weiterzählt. Es ist auch möglich, die gesendeten Daten jeweils zu Gruppen von Datensätzen zusammenzufassen, denen ein gemeinsamer Zählerwert zugeordnet ist. Diese können dann getrennt von den anderen Daten aktualisiert werden. Vorzugsweise werden alle einem Zählerwert zugehörigen Datensätze bzw. Daten in einem Funktelegramm oder aufeinander folgenden Funktelegrammen übertragen.

Das erfindungsgemäße Übertragungsverfahren lässt sich in dem Funksystem besonders vorteilhaft implementieren, wenn in der Recheneinheit eine Datenbank mit den jedem Gerät zugeordneten Daten oder Datensätzen mit den zugehörigen Zählerwerten geführt werden. Vorzugsweise ist die Datenbank gegen Stromausfall gesichert, um bei netzbetriebenen Geräten eine reibungslose Funkkommunikation auch bei Störungen des Netzbetriebs aufrecht erhalten zu können oder bei batteriebetriebenen Geräten einen einfachen Austausch der Batterien ohne Datenverlust zu ermöglichen.

In einer bevorzugten Ausgestaltung der Erfindung wird die Datenbank dynamisch geführt, so dass neue Geräte im laufenden Betrieb in das Funksystem einbindbar sind. Dazu weisen die Funktelegramme zusätzliche Erkennungszeichen für die jeweiligen Geräte auf, um die Daten bzw. Datensätze einem Gerät oder Heizkreis zuordnen zu können. Die Erkennungszeichen können insbesondere eine separate Geräte-ID aufweisen oder mit in die Zählerwerte integriert sein, bspw. einen bestimmten Bit-Bereich der Zählerwerte umfassen, der für eine Geräte-ID reserviert ist und nicht weitergezählt wird.

In einfacher Weise können die Zählerwerte bspw. als natürliche Zahlen gebildet sein und inkrementiert werden. Bei Zählerüberlauf und Initialisierung der Geräte können die Zählerwerte bspw. bei Null beginnen. In diesem Fall kann vorgesehen werden, dass Daten bzw. Datensätze mit dem Zählerwert Null immer abgespeichert werden, auch wenn er kleiner ist als der gespeicherte Zählerwert, so dass das Kommunikationsverfahren auch nach einem Zählerüberlauf, d.h. bei Erreichen des maximalen Zählerwerts, oder bei der Inbetriebnahme der Geräte reibungslos funktioniert. Es wäre in einer analogen Ausgestaltung natürlich auch möglich, einen anderen ausgezeichneten Zählerwert vorzusehen oder statt eines Inkrementieren des Zählerwerts diesen herunterzuzählen.

Es kann bspw. aufgrund einer Funkstörung oder eines Geräteausfalls vorkommen, dass ein Gerät über einen längeren Zeitraum keine Funktelegramme empfängt. Wenn während dieser Zeit ein Zählerüberlauf stattgefunden hat, kann der aktuelle Zählerwert niedriger sein als der letzte gespeicherte Zählerwert, obwohl die Daten aktueller sind und gespeichert werden sollten. Je nach Länge eines vollständigen Zählerzyklus bis zum Überlauf kann es daher geraume Zeit dauern, bis die Daten in dem Gerät wieder aktualisiert werden. Um diese Zeitspanne zu verkürzen, kann ein Gerät empfangene Daten zusammen mit dem Zählerwert erfindungsgemäß nur abspeichern und wieder aussenden, wenn der empfangene Zählerwert nicht in einem von dem letzten gespeicherten Zählerwert abhängigen Zählerwertbereich liegt. Die Grenzen können so gewählt werden, dass sie den letzten gespeicherten Zählerwert und so viele vergangene Zählerwerte einschließen, dass die Weiterleitung der Funktelegramme durch alle Geräte des Funksystems abgeschlossen ist. Hierdurch wird erreicht, dass keine fehlerhafte Aktualisierung durch das normale Fluten der Datentelegramme erfolgt. Anderseits wird eine schnellere Aktualisierung von zeitweise ausgefallenen oder im Funknetz nicht erreichbaren Geräten nach einem Zwischenzeitlichen Zählerüberlauf ermöglicht. Die Grenzen des Zählerwertbereichs sind insbesondere parametrierbar, so dass diese an die Gegebenheiten des Funksystems anpassbar sind.

Um auch nach einem Neustart einer Gerätes eine schnelle Aktualisierung zu erreichen, kann jedes Gerät alle aktuell empfangenen Daten und/oder Datensätze mit den zugehörigen Zählerwerten einmal abspeichern. Dies gilt auch für die erste Inbetriebnahme.

Ferner kann in dem Funksystem ein Gerät als Master-Gerät ausgebildet sein, in dem alle Daten gesammelt und ausgewertet werden. Dieses Master-Gerät kann bspw. zur Auslesung aller Verbrauchsdaten einer Liegenschaft oder zur Ansteuerung einer Heizungsregelung verwendet werden. Aufgrund des erfindungsgemäßen Prinzips des Flutnetzwerks sollten jedoch alle Daten in allen Geräten gleichermaßen vorliegen.

Erfindungsgemäß kann das Funksystem synchron mit den Geräten fest zugeordneten Sende- und Empfangszeitschlitzen, die zeitlich stochastisch verteilt sein können, und/oder asynchron arbeiten. Synchroner Betrieb ist vorzugsweise für batteriegestützte Geräte vorzusehen, die aus Batteriekapazitätsgründen nur während der ihnen zugeordneten Zeitschlitze an der Funkkommunikation teilnehmen. Asynchroner Betrieb ist vorzugsweise für netzbetriebene Geräte vorzusehen, die jederzeit empfangsbereit und somit in der Lage sind, Daten auch asynchron zu empfangen. Je nach an dem Funksystem teilnehmenden Geräten ist auch ein gemischter synchroner und asynchroner Betrieb des Funknetzes möglich.

Sofern mehrere Einrichtungen zum Wiederholen von Funktelegrammen (Repeater) zwischen den Geräten angeordnet sind, sind diese mehreren Einrichtungen in dem Funksystem vorzugsweise derart angeordnet, dass diese Einrichtungen keinen direkten Funkkontakt zueinander haben. Durch eine solche Anordnung kann eine zirkulare Datenübertragung mit Sicherheit verhindert werden. Da die Reichweite einzelner Funktelegramme in einem System zeitlich variieren kann und es daher schwierig ist, die vorgenannte Bedingung strikt einzuhalten, sollte die Anzahl dieser Einrichtungen zum Wiederholen der Funktelegramme, welche als einfache Funk-Repeater arbeiten und jedes empfangene Funktelegramm wieder aussenden, jedenfalls klein sein gegenüber der Zahl der anderen Geräte, zwischen den die Daten übertragen werden. Generell sollte die Anzahl der Repeater so klein wie möglich gehalten werden.

Alternativ kann vorgesehen werden, dass dieselben Funktelegramme durch die Einrichtungen zum Wiederholen von Funktelegrammen nur bis zum Erreichen einer vorgegebenen Anzahl von Aussendungen wiederholt werden. Dazu weisen die Repeater eine interne Logik auf, welche die einkommenden Funktelegramme analysiert und die Anzahl von Aussendungen desselben Funktelegramms begrenzt. Dies kann bspw. durch einen separaten, in dem Funktelegramm mitlaufenden Repeater-Zähler erfolgen, der bei jeder Aussendung des Funktelegramms durch einen Repeater weitergezählt wird. Dieser Repeater-Zähler kann akkumuliert oder nach dem Empfang eines Funktelegramms durch den Repeater jeweils zurückgesetzt werden. Alternativ könnte der Repeater auch eine interne Datenbank aufweisen, in der eine eindeutige Identifikation eines Funktelegramms, bspw. eine Prüfsumme, gespeichert und mit einem ihr zugeordneten Repeater-Zähler verbunden ist. Die Anzahl der Aussendungen kann dabei vorgegeben werden. Insbesondere kann die Anzahl auch auf Eins begrenzt sein.

Die Erfindung betrifft ferner Datensammler insbesondere von Verbrauchsinformationen, die mit dem vorbeschriebenen Funksystem ausgestattet bzw. zur Verwendung in diesem eingerichtet sind.

Weitere Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen:
- Fig. 1: schematisch den Aufbau eines Funknetzwerks mit verschiedenen Geräten und deren direkten Kommunikationsmöglichkeiten;
- Fig. 2: schematisch die Realisierung des erfindungsgemäßen Funksystems in einem ersten Übertragungsschritt;
- Fig. 3: schematisch die Realisierung des erfindungsgemäßen Funksystems in einem zweiten Übertragungsschritt;
- Fig. 4: schematisch die Realisierung des erfindungsgemäßen Funksystems in einem dritten Übertragungsschritt;
- Fig. 5: schematisch die Realisierung des erfindungsgemäßen Funksystems in einem weiteren Übertragungsschritt;
- Fig. 6: schematisch die Datenbankstruktur in einem Gerät gemäß einer ersten Ausführungsform;
- Fig. 7: schematisch die Datenbankstruktur in einem Gerät gemäß einer zweiten Ausführungsform und
- Fig. 8: schematisch den Aufbau des Zählers mit verschiedenen Zählerbereichen.

In Fig. 1 ist ein Funksystem 1 mit sieben als Datensammler ausgebildeten Geräten WHZ1 bis WHZ7 dargestellt. Die Datensammler WHZ bilden Wohnungszentralen eines Hausautomationssystems, das insbesondere zur Verbrauchswerterfassung und zur wärmebedarfsgeführten Heizungsregelung genutzt wird. Dazu ist das Gerät WHZ7 als Master-Wohnungszentrale ausgebildet, die an eine Heizungsregelung 2 einer Heizungsanlage 3 angeschlossen ist. Durch die Pfeile zwischen den Geräten WHZ ist jeweils eine direkte Funkkommunikationsrichtung dargestellt. Die Heizungsregelung 2 und die Heizungsanlage 3 kommunizieren über beliebige Kommunikationswege miteinander, bspw. auch drahtgebunden. Die Kommunikation zwischen der Master-Wohnungszentrale WHZ7 und der Heizungsregelung 2 kann über eine Funkverbindung oder eine drahtgebundene Verbindung realisiert sein.

Da das Gerät WHZ7 die Versorgungszustände aller anderen Geräte WHZ1 bis WHZ6 zur Weitergabe an die Heizungsregelung 2 bzw. zu deren Ansteuerung und die Verbrauchswerte der anderen Geräte WHZ1 bis WHZ 6 zur zentralen Ablesung aller Verbrauchswerte benötigt, ist das Funksystem 1 als Flutnetzwerk zur Übertragung von Daten zwischen den Geräten WHZ ausgebildet. Jedes der Geräte WHZ weist dazu eine Recheneinheit mit Datenspeicher, einen Funksender zum Senden und einen Funkempfänger zum Empfangen von die Daten enthaltenden Funktelegrammen auf. Datenspeicher, Funksender und Funkempfänger sind in Fig. 1 nicht dargestellt. Jedem Gerät WHZ sind als Datenquelle vorher festgelegte Daten zugeordnet. Dies sind insbesondere die in einer Wohnung durch entsprechende Heizkostenverteiler erfassten Verbrauchsdaten, bspw. in Form von Heizflächen- und Raumtemperaturwerten einer Wohnung, die einer Heizfläche zugeordneten Ventilhübe oder dgl. einen Heizkreis betreffenden Informationen, die in der Wohnungszentrale als zentralem Gerät WHZ zusammen erfasst, verwaltet und ggf. ausgewertet werden. Jedes Gerät WHZ speichert sowohl ihm zugeordnete Daten als auch von den anderen Geräten empfangene Daten ab und sendet diese als Funktelegramm mindestens einmal aus. Durch dieses sog. "Fluten" werden die Daten aller Geräte WHZ in dem gesamten Funksystem 1 verteilt und stehen auch an dem Master-Gerät WHZ7 zur Verfügung, das von seinem technischen Aufbau mit den anderen Geräten WHZ identisch sein kann.

In einem System intelligenter Geräte WHZ, die untereinander per Funkübertragung (Funkdatenbus) in dem Funksystem 1 vernetzt sind, werden Daten bzw. Datensätze als Zustandsinformationen ausgetauscht mit dem Ziel, dass diese Informationen an einem Master-Gerät WHZ7 gesammelt und ausgewertet werden. Dabei ist es vorteilhaft, wenn jedes Gerät WHZ im Funksystem 1 ein vollständiges Abbild aller Daten sämtlicher Geräte WHZ enthält. Die Funkvernetzung erfolgt derart, dass prinzipiell jedes Gerät WHZ in der Lage ist, Daten von jedem anderen Gerät WHZ innerhalb des Funknetzes direkt zu empfangen. Die Empfangswahrscheinlichkeit ist jedoch abhängig von den räumlichen Gegebenheiten und sinkt mit der Distanz und den die Funkstrecke dämpfenden Bauteilen (Zwischenwände, Geschossdecken usw.). Die Sendeleistung ist derart bemessen, dass bei einer der Anwendung entsprechenden typischen Gebäudeausstattung jedes Gerät WHZ mindestens von einem weiteren, jedoch in der Regel nicht von allen anderen Geräten WHZ innerhalb des Funknetzes empfangen wird. Die direkten Kommunikationswege sind in den Fig. 1 bis 5 jeweils als Pfeile dargestellt.

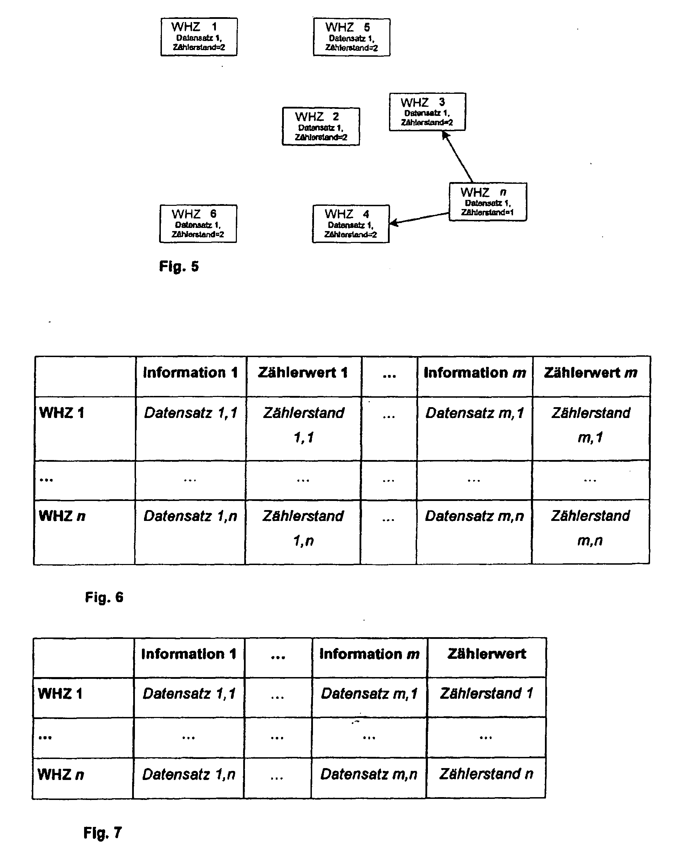

Jedes Gerät WHZ, das an dem Kommunikationsverfahren teilnimmt bzw. in das Funksystem 1 integriert ist, führt eine Datenbank, in der jedem teilnehmenden Gerät WHZ Datensätze und Zählerwerte zugeordnet sind. Beispiele für diese Datenbanken sind in den Fig. 6 und 7 dargestellt. Dabei ist in Fig. 6 jedem Datensatz ein eigener Zählerwert zugeordnet. In Fig. 7 sind dagegen alle Datensätze eines Gerätes WHZ zu einer Gruppe zusammengefasst, der ein Zählerwert zugeordnet ist. In diesem Fall erfolgt die Veränderung des Zählerwertes durch das Gerät WHZ, wenn mindestens ein Datensatz geändert wurde.

Realisiert wird die Datenübertragung dadurch, dass jedes Gerät WHZ die eigenen, ihm zugeordneten Daten bzw. Zustandsinformationen in der Datenbank abspeichert und als Datenquelle mehrmals (mit festgelegter Anzahl) versendet. Jedes empfangende Gerät WHZ speichert die Daten in der Datenbank ab und sendet sie genau einmal weiter. Hierdurch wird erreicht, dass sich die Daten auch über räumlich groß angelegte Funknetze verbreiten.

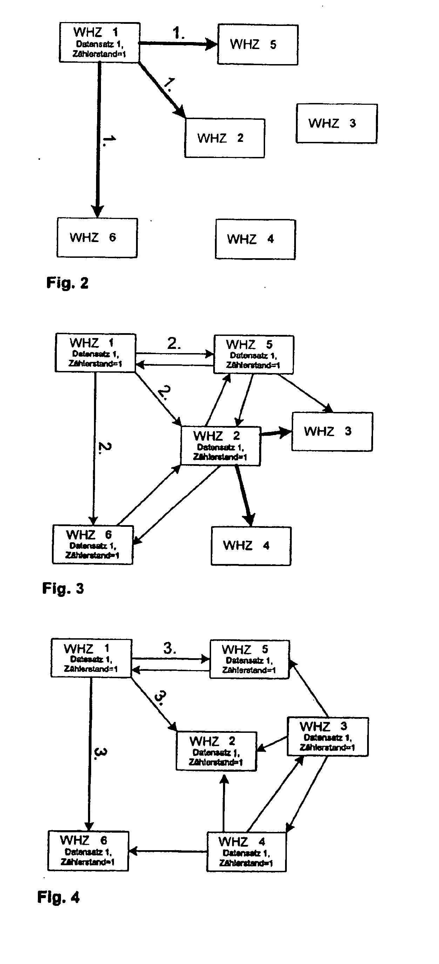

Das als Datenquelle fungierende Gerät WHZ versieht jeden Datensatz mit einem Zählerwert. Wird der Datensatz in der Datenquelle verändert, wird der zugeordnete Zähler um 1 erhöht und der Datensatz ausgesendet. Bei dem wiederholten Versenden eines unveränderten Datensatzes hingegen bleibt der Zähler gleich. Dies ist in den einen Ausschnitt eines Funksystems 1 zu verschiedenen Übertragungsschritten darstellenden Fig. 2 bis 4 gezeigt, wobei der Datensatz von dem Gerät WHZ1 insgesamt drei Mal ausgesendet wird. Jede dieser Aussendungen ist in einer der Fig. 2 bis 4 dargestellt.

Empfangende Geräte WHZ, in Fig. 2 die Geräte WHZ5, WHZ2 und WHZ6, speichern Datensätze nur dann ab und senden sie auch nur dann weiter, wenn der bereits gespeicherte Datensatz bzw. die Gruppe von Datensätzen entweder einen niedrigeren Zählerwert hat oder noch gar kein Datensatz abgespeichert wurde. Empfangende Geräte WHZ speichern in diesem Fall die geänderten Datensätze nur dann ab und leiten sie nur dann weiter, wenn der Zählerwert der abgespeicherten Datensätze kleiner als der Zählerwert der empfangenen Datensätze ist.

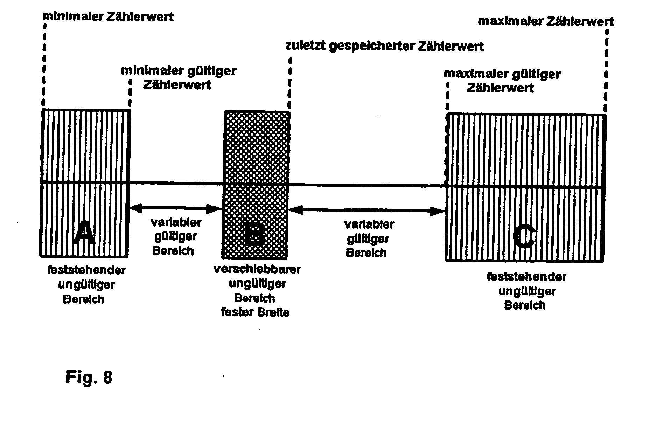

Fig. 8 zeigt schematisch den Aufbau des Zählers. Die Grenzen des Zählers zwischen dem minimalen und dem maximalen Zählerwert sind durch die Länge des für Speicherung verwendeten Speicherplatzes vorgegeben. Der von dem Zähler zu verwendende Wertebereich ist jedoch hiervon verschieden, da zu Beginn und Ende des maximalen Wertebereichs gesperrte Zählerbereiche A, C vorgesehen sind, die jeweils durch Minimal- und Maximalwerte definiert sind. Die gesperrten Zählerbereiche können für Zusatzinformationen in dem Funktelegramm verwendet werden, bspw. einen Header, eine Funknetz-Identifikation, eine Geräte-Identifikation für das Gerät, dem die Daten zugeordnet sind, oder dgl. enthalten. Technisch wird dies durch reservierte Bitbereiche in dem Zählerwert gelöst.

Der für die Zählung zur Verfügung stehende Bereich der Zählerwerte liegt als zwischen dem Maximalwert des Zählerbereichs A (entsprechend dem Startwert des Zählers) und dem Minimalwert des Zählerbereichs C (entsprechend dem maximal erreichbaren Zählerwert). Bei einem Zählerüberlauf (Erreichen des Minimalwerts des Zählerbereichs C) wird die Zählung bei Null bzw. dem ersten Zählerwert oberhalb des Maximalwerts des Zählerbereichs A fortgesetzt.

Zusätzlich ist ein ausgenommener Zählerwertbereich B innerhalb des für die Zählung zur Verfügung stehenden Bereichs vorgesehen, der von dem aktuellen, im Beispiel fortlaufend inkrementierten Zählerwert abhängt. Dabei umfasst der Zählerwertbereich B den aktuellen Zählerwert als Obergrenze und reicht eine vorgebbare Anzahl von Zählerwerten zurück.

Wenn von einem Gerät WHZ ein Funktelegramm mit einem Datenwert und einem Zählerwert empfangen wird, wird dieser mit dem gespeicherten Zählerwert verglichen. Liegt dieser im Bereich zwischen den Zählerwertbereichen A und C und gleichzeitig nicht im Zählerwertbereich B, wird das Funktelegramm von dem Gerät WHZ gespeichert und erneut ausgesendet. Andernfalls wird der Zählerwert nicht gespeichert. Damit besitzen die empfangenden Geräte WHZ ein Toleranzfenster zwischen dem Maximalwert des Zählerbereichs A und dem Minimalwert des Zählerwertbereichs B, innerhalb dessen auch niedrigere Zählerwerte akzeptiert werden, um ein Gerät bspw. nach einem zeitlichen Ausfall der Funkkommunikation schneller wieder aktualisieren zu können.

Hierdurch wird sichergestellt, dass jeder Datensatz von einem weiterleitenden Gerät WHZ genau einmal weitergesendet wird, und es wird verhindert, dass veraltete Informationen durch das Netz zirkulieren und den Übertragungskanal blockieren bzw. ,verstopfen'. Der Datentransfer wird so auf ein definierbares Maß reduziert und die aktuellen Daten erreichen in kürzester Zeit das Master-Gerät WHZ7.

Anhand der Fig. 2 bis 5 wird der Ablauf der Funkkommunikation nachfolgend noch einmal detailliert erläutert. Das als Datenquelle arbeitende Gerät WHZ1 sendet einen Datensatz mit Verbrauchswerten, die an dem Gerät WHZ1 zugeordneten Verbrauchszählern erfasst und dem Gerät WHZ1 zugeleitet wurden, mit dem Zählerwert "1" zum ersten Mal aus (Fig. 2). Das Funktelegramm erreicht die Geräte WHZ5, WHZ2 und WHZ6 und wird dort gespeichert. Dies wird durch die fett unterlegten Pfeile dargestellt.

In Fig. 3 sendet das Gerät WHZ1 den Datensatz mit dem Zählerwert "1" zum zweiten Mal aus. Die Funktelegramme erreichen wieder die Geräte WHZ5, WHZ2 und WHZ6, werden dort aber nicht abgespeichert. Dies wird durch dünn dargestellte Pfeile ausgedrückt. Ferner senden die Geräte WHZ5, WHZ2 und WHZ6 den zuvor erhaltenen Datensatz weiter, der in den Geräten WHZ3 und WHZ4 abgespeichert wird, da der Datensatz dort noch nicht abgespeichert war.

Bei dem in Fig. 4 dargestellten Übertragungsschritt sendet das Gerät WHZ1 den Datensatz zum dritten Mal mit demselben Zählerstand "1" aus. Ferner senden die Geräte WHZ3 und WHZ4 den im letzen Übertragungsschritt (Fig. 3) empfangen Datensatz einmal aus. Da bereits alle Geräte den Datensatz gespeichert haben, erfolgt jedoch keine weitere Speicherung und kein Weitersenden mehr.

Zu einem späteren, in Fig. 5 dargestellten Zeitpunkt wird ein "veralteter" Datensatz von einem Gerät WHZn mit den Zählerstand "1" versendet und von den Geräten WHZ3 und WHZ4 empfangen, jedoch nicht abgespeichert, da dort bereits aktuellere Datensätze mit Zählerstand "2" vorliegen.

Zur Stabilität des Funksystems 1 ist ferner vorgesehen, dass jedes Gerät WHZ nach einem Neustart die Datenbank mit den jeweils aktuell empfangenden Daten bzw. Informationen sukzessive füllt. Die Datenquelle setzt das Senden nach einem Neustart auf dem zuletzt verwendeten Zählerstand wieder auf.

Die Verwendung eines dimensionslosen Zählerwertes sichert im Gegensatz zur Verwendung eines Zeitstempels die Unabhängigkeit von äußeren Einflüssen, die eine Synchronisation alle Geräte WHZ aufeinander erfordern.

### Bezugszeichenliste:

- 1: Funksystem
- 2: Heizungsreglung
- 3: Heizungsanlagen

- WHZi: Gerät, Datensammler, Wohnungszentrale mit der Nummer i, i=1,...,n
- A, C: Zählerbereich
- B: Zählerwertbereich

## Patentansprüche

1. Verfahren zur Übertragung von Daten in einem Funksystem zwischen mehreren als Datensammler zur Erfassung und/oder Auswertung von Verbrauchsdaten und/oder Versorgungszuständen ausgebildeten Geräten (WHZ) mit jeweils einer Recheneinheit mit Datenspeicher, einem Funksender zum Senden und einem Funkempfänger zum Empfangen von die Daten enthaltenden Funktelegrammen, wobei mindestens einem Gerät (WHZ) als Datenquelle vorher festgelegte Daten zugeordnet sind und jedes Gerät (WHZ) sowohl ihm zugeordnete Daten als auch von einem anderen Gerät (WHZ) empfangene Daten in seinem Datenspeicher abspeichert und als Funktelegramm mindestens einmal aussendet, **dadurch gekennzeichnet, dass** jedes Gerät (WHZ) vorher festgelegte, ihm zugeordnete Daten mit einem Zählerwert versieht, den Zählerwert bei einer Änderung dieser Daten weiterzählt und die geänderten Daten zusammen mit dem Zählerwert mit festgelegter Anzahl mehrfach aussendet und dass jedes Gerät (WHZ) empfangene Daten zusammen mit dem Zählerwert in dem Datenspeicher nur abspeichert und wieder aussendet, wenn der Zählerwert dieser Daten sich gegenüber dem in seinem Datenspeicher abgespeicherten Zählerwert verändert hat, wobei jedes Gerät (WHZ) von einem anderen Gerät (WHZ) empfangene Daten mit gleichem Zählerwert nur genau einmal aussendet.

2. Verfahren zur Übertragung von Daten in einem Funksystem nach Anspruch 1, **dadurch gekennzeichnet, dass** die einem Gerät (WHZ) zugeordneten Daten mehrere Datensätze beinhalten, wobei mehreren Datensätzen ein gemeinsamer Zählerwert zugeordnet sein kann.

3. Verfahren zur Übertragung von Daten in einem Funksystem nach einem der vorhergehenden Ansprüche, **dadurch gekennzeichnet, dass** in der Recheneinheit eine Datenbank mit den jedem Gerät (WHZ) zugeordneten Daten oder Datensätzen mit den zugehörigen Zählerwerten geführt werden.

4. Verfahren zur Übertragung von Daten in einem Funksystem nach Anspruch 3 **dadurch gekennzeichnet, dass** die Datenbank dynamisch geführt wird, so dass neue Geräte (WHZ) im laufenden Betrieb in das Funksystem einbindbar sind.

5. Verfahren zur Übertragung von Daten in einem Funksystem nach einem der vorhergehenden Ansprüche, **dadurch gekennzeichnet, dass** die Zählerwerte inkrementiert werden.

6. Verfahren zur Übertragung von Daten in einem Funksystem nach einem der vorhergehenden Ansprüche, **dadurch gekennzeichnet, dass** ein Gerät (WHZ) empfangene Daten zusammen mit dem Zählerwert nur abspeichert und wieder aussendet, wenn der empfangene Zählerwert nicht in einem von dem letzten gespeicherten Zählerwert abhängigen Zählerwertbereich liegt.

7. Verfahren zur Übertragung von Daten in einem Funksystem nach einem der vorhergehenden Ansprüche, **dadurch gekennzeichnet, dass** jedes Gerät (WHZ) nach einem Neustart alle aktuell empfangenen Daten und/oder Datensätze mit den zugehörigen Zählerwerten einmal abspeichert.

8. Verfahren zur Übertragung von Daten in einem Funksystem nach einem der vorhergehenden Ansprüche, **dadurch gekennzeichnet, dass** ein Gerät (WHZ) als Master-Gerät ausgebildet ist, in dem alle Daten gesammelt und ausgewertet werden.

9. Verfahren zur Übertragung von Daten in einem Funksystem nach einem der vorhergehenden Ansprüche, **dadurch gekennzeichnet, dass** das Funksystem synchron mit den Geräten (WHZ) fest zugeordneten Sende- und Empfangszeitschlitzen, die zeitlich stochastisch verteilt sein können, und/oder asynchron arbeitet.

10. Verfahren zur Übertragung von Daten in einem Funksystem nach einem der vorhergehenden Ansprüche, **dadurch gekennzeichnet, dass** mehrere Einrichtungen zum Wiederholen von Funktelegrammen in dem Funksystem derart angeordnet werden, dass die Einrichtungen keinen direkten Funkkontakt zueinander haben.

11. Verfahren zur Übertragung von Daten in einem Funksystem nach einem der vorhergehenden Ansprüche, **dadurch gekennzeichnet, dass** dieselben Funktelegramme durch die Einrichtungen zum Wiederholen von Funktelegrammen nur bis zum Erreichen einer vorgegebenen Anzahl von Aussendungen wiederholt werden.

12. Datensammler mit einer Recheneinheit, einem Funkempfänger und einem Funksender zur Verwendung in einem Funksystem (1), **dadurch gekennzeichnet, dass** die Recheneinheit des Datensammlers (WHZ) mit einer Funlttelegrammverwaltung zur Einbindung des Datensammlers (WHZ) in alle Schritte des Verfahrens zur Übertragung von Daten in einem Funksystem (1) nach einem der Ansprüche 1 bis 11 ausgebildet ist.

## Claims

1. A method of transmitting data in a radio system between several devices (WHZ) designed as data collectors for the capture and/or evaluation of consumption data and/or supply conditions, each with a processing unit with data store, a radio transmitter for transmitting and a radio receiver for receiving radio telegrams containing the data, wherein data predefined are assigned to at least one device (WHZ) as the data source and each device (WHZ) stores both the data assigned to it and also the data received from another device (WHZ) in a data store and transmits it at least once as a radio telegram, **characterised in that** each device (WHZ) provides predefined data assigned to it with a counter value, counts on the counter value if there is a change in this data and transmits the changed data along with the counter value with the defined number several times and that each device (WHZ) simply stores received data along with the counter value in the data store and retransmits it when the counter value of this data has changed compared with the counter value stored in its data store, wherein each device (WHZ) only transmits data with the same counter value received from another device (WHZ) precisely once.

2. The method of transmitting data in a radio system according to claim 1, **characterised in that** the data assigned to a device (WHZ) contains several data records, wherein several data records can be assigned a joint counter value.

3. The method of transmitting data in a radio system according to one of the preceding claims, **characterised in that** a database with the data assigned to each device (WHZ) or data records with the associated counter values is run in the processing unit.

4. The method of transmitting data in a radio system according to claim 3, **characterised in that** the database is run dynamically, so that new devices (WHZ) can be integrated into the radio system during operation.

5. The method of transmitting data in a radio system according to one of the preceding claims, **characterised in that** the counter values are incremented.

6. The method of transmitting data in a radio system according to one of the preceding claims, **characterised in that** a device (WHZ) only stores received data along with the counter value and retransmits it when the counter value received does not lie within a counter value range that depends on the last counter value stored.

7. The method of transmitting data in a radio system according to one of the preceding claims, **characterised in that** each device (WHZ) stores all currently received data and/or data records along with the associated counter values once after it has been restarted.

8. The method of transmitting data in a radio system according to one of the preceding claims, **characterised in that** one device (WHZ) is designed as the master device, in which all data is collected and evaluated.

9. The method of transmitting data in a radio system according to one of the preceding claims,
**characterised in that** the radio system works synchronously with transmission and reception time slots permanently assigned to the devices (WHZ), which can be randomly distributed, and/or works asynchronously.

10. The method of transmitting data in a radio system according to one of the preceding claims, **characterised in that** several mechanisms for repeating radio telegrams are disposed in the radio system, so that the mechanisms have no direct radio contact with one another.

11. The method of transmitting data in a radio system according to one of the preceding claims, **characterised in that** the same radio telegrams are repeated by the mechanisms for repeating radio telegrams only until a preset number of transmissions has been reached.

12. A data collector with a processing unit, a radio receiver and a radio transmitter for use in a radio system (1), **characterised in that** the processing unit of the data collector (WHZ) is designed with radio telegram management to integrate the data collector (WHZ) in all stages of the procedure involved in transmitting data in a radio system (1) according to one of the claims 1 to 11.

## Revendications

1. Procédé de transmission de données dans un système radio entre plusieurs appareils (WHZ) conçus comme collecteurs de données pour la saisie et/ou pour l'analyse de données de consommation et/ou d'états d'alimentation comprenant chacun une unité de calcul avec une mémoire de données, un émetteur radio pour l'émission et un récepteur radio pour la réception de radiotélégrammes contenant les données, des données définies auparavant comme source de données étant attribuées à au moins un appareil (WHZ) et chaque appareil (WHZ) stockant aussi bien des données qui lui sont attribuées que des données reçues d'un autre appareil (WHZ) dans sa mémoire de données et les émettant au moins une fois sous forme de radiotélégramme, **caractérisé en ce que** chaque appareil (WHZ) dote des données qui ont été fixées auparavant et lui ont été attribuées d'une valeur de compteur, continue de compter la valeur de compteur dans le cas d'un changement de ces données et envoie plusieurs fois les données modifiées en même temps que la valeur du compteur avec le nombre défini et **en ce que** chaque appareil (WHZ) stocke des données reçues conjointement avec la valeur de compteur dans la mémoire de données et les envoie à nouveau uniquement dans le cas où la valeur de compteur de ces données a changé par rapport à la valeur de compteur stockée dans sa mémoire de données, chaque appareil (WHZ) envoyant des données reçues d'un autre appareil (WHZ) avec la même valeur de compteur uniquement exactement une seule fois.

2. Procédé de transmission de données dans un système radio selon la revendication 1, **caractérisé en ce que** les données attribuées à un appareil (WHZ) contiennent plusieurs ensembles de données, une valeur de compteur commune pouvant être attribuée à plusieurs ensembles de données.

3. Procédé de transmission de données dans un système radio selon l'une quelconque des revendications précédentes, **caractérisé en ce qu'**une banque de données avec les données ou ensembles de données attribués à chaque appareil (WHZ) avec les valeurs de compteur spécifiques sont gérées dans l'unité de calcul.

4. Procédé de transmission de données dans un système radio selon la revendication 3, **caractérisé en ce que** la banque de données est gérée de façon dynamique, de sorte que de nouveaux appareils (WHZ) peuvent être intégrés dans le système radio pendant le service continu.

5. Procédé de transmission de données dans un système radio selon l'une quelconque des revendications précédentes, **caractérisé en ce que** les valeurs de compteur sont incrémentées.

6. Procédé de transmission de données dans un système radio selon l'une quelconque des revendications précédentes, **caractérisé en ce qu'**un appareil (WHZ) stocke des données reçues en même temps que la valeur de compteur et les envoie à nouveau uniquement dans le cas où la valeur de compteur reçue ne se situe pas dans une plage de valeurs de compteur qui est dépendante de la dernière valeur de compteur stockée.

7. Procédé de transmission de données dans un système radio selon l'une quelconque des revendications précédentes, **caractérisé en ce que** chaque appareil (WHZ) stocke une seule fois après un redémarrage l'ensemble des données et/ou les ensembles de données actuellement reçus avec les valeurs de compteur spécifiques.

8. Procédé de transmission de données dans un système radio selon l'une quelconque des revendications précédentes, **caractérisé en ce que** un appareil (WHZ) est conçu comme appareil maître dans lequel toutes les données sont collectées et analysées.

9. Procédé de transmission de données dans un système radio selon l'une quelconque des revendications précédentes, **caractérisé en ce que** le système radio travaille de façon synchrone avec les créneaux temporels d'émission et de réception qui sont attribués de façon fixe aux appareils (WHZ) et peuvent être répartis de façon stochastique dans le temps, et/ou travaille de façon asynchrone.

10. Procédé de transmission de données dans un système radio selon l'une quelconque des revendications précédentes, **caractérisé en ce que** plusieurs dispositifs pour la répétition de radiotélégrammes sont disposés dans le système radio de telle sorte que les dispositifs n'ont aucun contact radio direct les uns avec les autres.

11. Procédé de transmission de données dans un système radio selon l'une quelconque des revendications précédentes, **caractérisé en ce que** les mêmes radiotélégrammes ne sont répétés par les dispositifs de répétition de radiotélégrammes que jusqu'au moment où un nombre prédéfini d'émissions est atteint.

12. Collecteur de données comprenant une unité de calcul, un récepteur radio et un émetteur radio pour une utilisation dans un système radio (1), **caractérisé en ce que** l'unité de calcul du collecteur de données (WHZ) est conçue avec une gestion de radiotélégrammes pour l'intégration du collecteur de données (WHZ) dans toutes les étapes du procédé de transmission de données dans un système radio (1) selon l'une quelconque des revendications 1 à 11.
